(19) Europäisches Patentamt
European Patent Office
Office européen des brevets

(11) EP 2 497 681 A2

(12) **EUROPÄISCHE PATENTANMELDUNG**

(43) Veröffentlichungstag:
12.09.2012 Patentblatt 2012/37

(51) Int Cl.:
*B60M 3/00* (2006.01)

(21) Anmeldenummer: 12001509.4

(22) Anmeldetag: 06.03.2012

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**

(30) Priorität: **08.03.2011 DE 102011013330**

(71) Anmelder: **Balfour Beatty Rail GmbH**
**81373 München (DE)**

(72) Erfinder: **Zynovchenko, Andriy**
**63067 Offenbach am Main (DE)**

(74) Vertreter: **Oppermann, Frank**
**Luderschmidt, Schüler & Partner**
**Patentanwälte**
**John-F-Kennedy-Strasse 4**
**65189 Wiesbaden (DE)**

(54) **Einphasige Speiseanordnung und Verfahren zur Versorgung von Wechselstrom-Bahnen mit Einphasenwechselstrom**

(57) Die Erfindung betrifft eine einphasige Speiseanordnung, die mehrere Fahrleitungsabschnitte und ein oder mehrere Unterwerke zur Bereitstellung von elektrischer Energie für elektrische Schienentriebfahrzeuge umfasst,, wobei die Enden der von aufeinanderfolgenden Unterwerfen gespeisten Fahrleitungsabschnitte von einer Trennstelle getrennt sind. Darüber hinaus betrifft die Erfindung ein Verfahren zur Versorgung von Wechselstrom-Bahnen mit Einphasenwechselstrom. Das erfindungsgemäße Verfahren und die erfindungsgemäße Vorrichtung beruhen darauf, dass zur Erhöhung der Fahrleitungsspannung die Unterspannungsseite eines Autotransformators (Spartransformators) mit einem automatisch geregelten Stufenschalter an das Ende des einen der aufeinanderfolgenden Fahrleitungsabschnitte und die Oberspannungsseite des Autotransformators an das Ende des anderen der aufeinanderfolgenden Fahrleitungsabschnitte angeschlossen wird. Die erfindungsgemäße Vorrichtung und das erfindungsgemäße Verfahren stellen eine kostengünstige Alternative zu der Errichtung eines Zweispannungssystems oder eines zusätzlichen vollwertigen Unterwerkes dar und bieten insbesondere dann eine Alternative, wenn die Möglichkeiten der Fahrleitungsverstärkung bereits ausgeschöpft sind. Weiterhin besteht nur ein vergleichsweise geringer Platzbedarf aufgrund des Einsatzes nur eines Autotransformators (Spartxansformator). Die erfindungsgemäße Vorrichtung und das erfindungsgemäße Verfahren können nicht nur zur Erweiterung der Speiselänge im Normalbetrieb, sondern auch zur Verbesserung der Redundanz beim Ausfall eines Traktionstransformators oder eines kompletten Unterwerkes eingesetzt werden.

Fig. 2

EP 2 497 681 A2

**Beschreibung**

Die Erfindung betrifft eine einphasige Speiseanordnung, die mehrere Fahrleitungsabschnitte und Unterwerke zur Bereitstellung von elektrischer Energie für Schienentriebfahrzeuge umfasst. Darüber hinaus betrifft die Erfindung ein Verfahren zur Versorgung von Wechselstrom-Bahnen mit Einphasenwechselstrom.

Für ein Bahnstromsystem ist die Fahrleitungsspannung eines der wichtigsten Bewertungskriterien. Die Fahrleitungsspannung soll sowohl im Normalbetrieb als auch in verschiedenen Ausfallszenarien innerhalb bestimmter Grenzwerte liegen. Nach DIN EN 50163:2005 darf die Spannung am Stromabnehmer die Werte $U_{min1}$ und $U_{min2}$ nicht unterschreiten, aber auch die Werte $U_{max1}$ und $U_{max2}$ nicht überschreiten. Für TSI Strecken sind nach DIN EN 50388:2005 auch die zulässigen Mindestwerte für die mittlere nutzbare Spannung einzuhalten. An die Mindestspannung am Stromabnehmer können aber auch davon abweichende projektspezifische Anforderungen gestellt werden.

Wenn sich zeigt, dass die Spannung am Stromabnehmer die zulässigen Mindestwerte unterschreitet, ist eine Anpassung des Bahnstromsystems erforderlich. Daher hat das Spannungskriterium in vielen Fällen einen entscheidenden Einfluss auf die Wahl zwischen einem Ein- und einem Zweispannungssystem, auf die Speiselängen und die Anzahl und Standorte der Unterwerke, die Leistungen und Kurzschlussspannungen einzelner Transformatoren, die Auslegung der Fahrleitung im Hinblick auf die Fahrleitungsimpedanz sowie die Verfügbarkeit und den Grad der Redundanz in Ausfallszenarien.

Die Reihe der Maßnahmen zur Verbesserung der Fahrleitungsspannung, die dem Fachmann zur Verfügung stehen, ist begrenzt. Zu den konventionellen Lösungen gehören die Implementierung eines Zweispannungssystems mit Hilfe von Autotransformatoren, die Verkürzung der Speiselängen durch Errichtung zusätzlicher Unterwerke und die Verstärkung der Fahrleitung beispielsweise mit Verstärkungsleitern sowie der Einsatz von Traktionstransformatoren mit einer niedrigeren Impedanz. Die bekannten Lösungen zur Verbesserung der Fahrleitungsspannung sind aber mit den nachfolgenden Nachteilen verbunden.

Eine bewährte Lösung ist die Errichtung eines Zweispannungssystems, das auch als Autotransformatorensystem oder AT-System bezeichnet wird. Am weitesten sind solche Systeme in 50/25 kV 50 Hz Ausführung verbreitet. Bei einem Zweispannungssystem werden im zweipolig aufgebauten Unterwerk zwei um 180° phasenverschobene Wechselspannungen zur Verfügung gestellt, wobei einer der beiden Leiter als so genannter Negativfeeder entlang der Strecke isoliert mitgeführt wird. Entlang der Strecke sind in regelmäßigen Abständen Autotransformatoren mit einem Transformationsfaktor von 2:1 aufgestellt und an die Fahrleitung, an den Negativfeeder sowie an die Rückleitung angeschlossen. Mit Hilfe der Autotransformatoren wird ein Teil der elektrischen Energie vom Unterwerk zum Triebfahrzeug auf der 50 kV Spannungsebene übertragen. Dadurch werden die Spannungsverluste reduziert und der Speisebereich im Vergleich zu einem konventionellen Einspannungssystem erweitert. Es sind auch Zweispannungssysteme mit einpolig aufgebauten Unterwerken bekannt, wenn die zweite Spannung erst auf Autotransformatoren erzeugt wird. Die Errichtung eines Zweispannungssystems ist jedenfalls mit wesentlich höheren Investitionen verbunden.

Durch die Errichtung zusätzlicher Unterwerke lassen sich die Längen einzelner Speiseabschnitte verkürzen. Dabei können die installierten Leistungen einzelner Unterwerke reduziert werden. Diese Lösung ist jedoch mit einem erheblichen Mehraufwand verbunden. Hierzu zählen nicht nur die Kosten für die zusätzlichen Unterwerke selbst, sondern auch die Kosten für die Errichtung der Anschlussleitungen ans Hochspannungsnetz. In manchen Fällen ist diese Lösung in der Praxis beispielsweise dann nicht realisierbar, wenn das Unterwerk und die Hochspannungszuleitung in einem Naturschutzgebiet oder Tunnel liegen müssten. Weiterhin sinkt mit steigender Anzahl der Unterwerke der Ausnutzungsgrad jedes einzelnen Unterwerkes, was die Wirtschaftlichkeit des gesamten Bahnsystems negativ beeinflusst.

Die Fahrleitungsimpedanz und folglich der Spannungsfall auf der Fahrleitung lassen sich mit einer Fahrleitungsverstärkung, beispielsweise durch den Einsatz eines Verstärkungsleiters, reduzieren. Der Mehraufwand für diese Lösung ist üblicherweise geringer als für die Errichtung zusätzlicher Unterwerke oder eines Zweispannungssystems. Bei Neubaustrecken müssen für die Mehrlast geeignete Maste und Fundamente errichtet sowie Verstärkungsseile vorgesehen werden. Wird eine bestehende Strecke nachgerüstet, muss sichergestellt werden, dass die bestehenden Masten die Mehrlast durch die Verstärkungsseile tragen können. Da die Fahrleitung des nachgerüsteten Abschnittes für die Montagearbeiten abgeschaltet werden muss, ist mit entsprechenden Sperrzeiten des Bahnbetriebs zu rechnen. Im Übrigen führt die Fahrleitungsverstärkung nicht immer zur ausreichenden Verbesserung der Spannung. Da die Impedanz einer Fahrleitung bei Wechselstrombahnen hauptsächlich durch die magnetische Kopplung der Leiterschleifen bestimmt wird, stößt die Erhöhung des Querschnittes des Verstärkungsseils oder der Anzahl der parallel geführten Verstärkungsseile im Hinblick auf die Impedanzminderung schnell an ihre Grenzen. Die beschriebene Lösung kommt dann nicht in Frage, wenn die bestehende Fahrleitung bereits mit Verstärkungsleitern ausgestattet, die Fahrleitungsspannung aber immer noch unzulässig niedrig ist.

Eine weitere allerdings sehr begrenzte Möglichkeit der Spannungserhöhung bei neugeplanten Unterwerken besteht darin, die Traktionstransformatoren in den Unterwerken mit einer möglichst kleinen Kurzschlussimpedanx zu wählen, um den Spannungsfall am Transformator zu minimieren. Dies kann durch den Einsatz von Transformatoren mit kleinerer Kutzschlussspannung, die allerdings aus konstruktiven Gründen nur in einem engen Bereich variiert werden kann, oder von Transformatoren mit höherer Leistung, also durch ihre Überdimensionierung, erreicht werden. Dadurch erhöht sich aber der fahrleitungsseitige Kurzschlussstrom, für den der projektspezifische höchstzulässige Grenzwert üblicherweise definiert ist.

Der Erfindung liegt die Aufgabe zu Grunde, die Fahrleitungsspannung unter Vermeidung der oben aufgezeigten Nachteile der bekannten Lösungsansätze zu erhöhen.

Die Lösung dieser Aufgabe erfolgt mit den Merkmalen der unabhängigen Patentansprüche 1 und 6. Vorteilhafte Ausführungsformen der Erfindung sind Gegenstände der Unteransprüche.

Die Ereindung ist für ein einphasiges Fahrleitungssystem zur Versorgung von Wechselstrombahnen mit Einphasenwechselstrom bestimmt, das mehrere Fahrleitungsabschnitte und eines oder mehrere Unterwerke zur Bereitstellung von elektrischer Energie für Schienentriebfahrzeuge umfasst.

Das erfindungsgemäße Verfahren beruht darauf, dass zur Erhöhung der Fahrleitungsspannung die Unterspannungsseite eines Autotransformators (Spartransformators) an das Ende des einen der aufeinanderfolgenden Fahrleitungsabschnitte und die Oberspannungsseite des Autotransformators an das Ende des anderen der aufeinanderfolgenden Fahrleitungsabschnitte angeschlossen wird, wobei der an die Unterspannungsseite des Autotransformators angeschlossene Fahrleitungsabschnitt von einem Unterwerk gespeist wird und der Autotransformator die elektrische Energie von diesem Abschnitt in den oberspannungsseitig angeschlossenen Fahrleitungsabschnitt unter Anhebung der Fahrleitungsspannung überträgt.

Die erfindungsgemäße Vorrichtung sieht zur Erhöhung der Fahrleitungsspannung einen zuschaltbaren Autotransformator und eine Einrichtung zum Zuschalten des Autotransformators vor, die vorzugsweise einen Stufenschalter und eine Regel- und Steuerungseinheit zu seiner Ansteuerung aufweist.

Die erfindungsgemäße Vorrichtung und das erfindungsgemäße Verfahren stellen eine kostengünstige Alternative zu der Errichtung eines Zweispannungssystems oder eines zusätzlichen vollwertigen Unterwerkes dar und bieten insbesondere dann eine Alternative, wenn die Möglichkeiten der Fahrleitungsverstärkung bereits ausgeschöpft sind. Weiterhin besteht nur ein vergleichsweise geringer Platzbedarf aufgrund des Einsatzes nur eines Autotransformators.

Die erfindungsgemäße Vorrichtung und das erfindungsgemäße Verfahren können nicht nur zur Erweiterung der Speiselänge im Normalbetrieb, sondern auch zur Verbesserung der Redundanz beim Ausfall eines Traktionstransformators oder eines kompletten Unterwerkes eingesetzt werden. Die Erfindung kann sowohl für Neubaustrecken als auch die Nachrüstung bestehender Strecken eingesetzt werden. Im letzten Fall sind die Betriebssperrzeiten deutlich kürzer als beispielsweise bei der Fahrleitungsverstärkung. Auch sind weitere Speisekonzepte, beispielsweise der Einsatz mehrerer nacheinander geschalteter Autotransformatoren oder die Spannungsstützung auf zweiseitig gespeisten Abschnitten in 15 kV 16,7 Hz Fahrleitungsnetzen möglich.

Grundsätzlich ist die Zuschaltung eines Autotransformators mit nur einem festen Übersetzungsverhältnis ausreichend. Wenn der Autotransformator nur ein fest vorgegebenes Übersetzungsverhälmis hat, kann die Spannung nur auf ein bestimmtes Niveau angehoben werden. Nachteilig ist dabei allerdings, dass die Spannung auf dem oberspannungsseitig angeschlossenen Fahrleitungsabschnitt die höchstzulässigen Spannungsgrenzen übersteigen kann. Daher sieht eine bevorzugte Ausführungsform des erfindungsgemäßen Verfahrens einen Autotransformator mit einer Wicklung vor, die mehrere Anzapfungen hat, wobei eine der Anzapfungen mit Hilfe einer Einrichtung zum Zuschalten mit dem Ende des einen der aufeinanderfolgenden Fahrleitungsabschnitte verbunden wird. Eine bevorzugte Ausführungsform der erfindungsgemäßen Vorrichtung sieht vor, dass die Einrichtung zum Zuschalten des Autotransformators derart ausgebildet ist, das eine der Anzapfungen mit dem Ende des einen der aufeinanderfolgenden Fahrleitungsabschnitte verbindbar ist. Die Einrichtung zum Zuschalten des Autotransformators weist vorzugsweise einen Stufenschalter auf, der vorzugsweise mit Hilfe einer Regel- und Steuerungseinheit in Abhängigkeit von der aktuellen Höhe der Fahrleitungsspannung, welche vorzugsweise über einen Spannungswandler am Ort des Anschlusses des Autotransformators erfasst wird, automatisch angesteuert wird.

Die automatische Zuschaltung des Autotransformators mit dem jeweiligen Übersetzungsverhältnis erlaubt die gezielte steuerbare Anhebung der Fahrleitungsspannung auf dem an die Oberspannungsseite des Autotransformators zugeschalteten und dadurch über den Autotransformator mit Energie versorgten Fahrleitungsabschnitt, wobei die angehobene Fahrleitungsspannung innerhalb der vorgegebenen Grenzen gehalten wird.

Die Einrichtung zum Zuschalten des Autotransformators ist vorzugsweise derart ausgebildet, dass der vom Unterwerk gespeiste unterspannungsseitige Fahrleitungsabschnitt über eine der Anzapfungen an den Autotransformator angeschlossen wird, wobei die Anzapfung in Abhängigkeit von der gemessenen Fahrleitungsspannung automatisch gewählt wird. Dadurch kann eine automatische Anhebung der Fahrleitungsspannung auf dem oberspannungsseitig angeschlossenen Fahrleitungsabschnitt innerhalb der vorgegebenen Grenzen erreicht werden. Die Grundkonzepte der Steuerungs- und Regelungsverfahren werden im nachstehenden Ausführungsbeispiel erläutert.

Nachfolgend wird ein Ausführungsbeispiel der Erfindung unter Bezugnahme auf die Zeichnungen im Einzelnen erläutert.

Es zeigen:

Fig. 1 eine vereinfachte schematische Darstellung einer herkömmlichen Speiseanordnung im AC 1x25 kV 50 Hz einseitig gespeisten Fahrleitungsnetz im Normalbetrieb, Fig. 2 die erfindungsgemäße Speiseanordnung in vereinfachter schematischer Darstellung im einseitig gespeisten Fahrleitungsnetz während des Normalbetriebs,

Fig. 3 die erfindungsgemäße Speiseanordnung im einseitig gespeisten Fahrleitungsnetz nach Ausfall eines Unterwerks, die der Erhöhung der Redundanz dient, und

Fig. 4 eine Speiseanordnung im einseitig gespeisten Fahrleitungsnetz, die der Erhöhung der Speiselänge im Normalbetrieb dient.

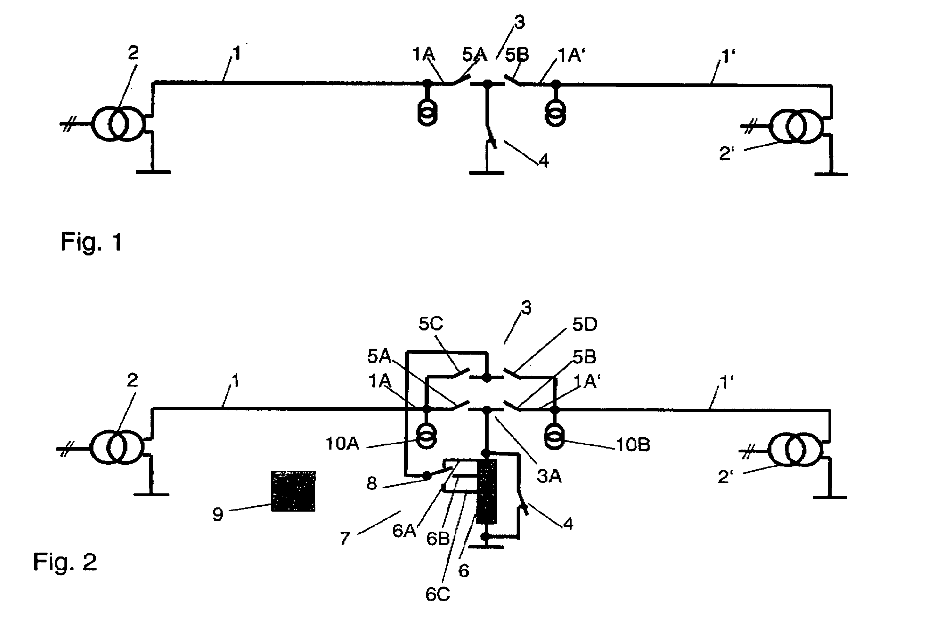

Fig. 1 zeigt eine konventionelle Speiseanordnung in vereinfachter schematischer Darstellung, bei der die Erfindung Anwendung finden kann. Das einphasige Fahrleitungssystem zur Versorgung von Wechselstrombahnen mit Einphasenwechselstrom umfasst mehrere Fahrleitungsabschnitte. Bei dem vorliegenden Ausführungsbeispiel umfasst das Fahrleitungssystem zwei Fahrleitungsabschnitte 1 und 1'. Für jeden der Fahrleitungsabschnitte 1 bzw. 1' wird die Traktionsenergie mit einem Unterwerk 2 bzw. 2' bereitgestellt. Die Enden 1A, 1A' der beiden von den Unterwerken 2, 2' gespeisten Fahrleitungsabschnitte 1, 1' sind durch eine Phasentrennstelle 3 getrennt. Im Bereich der Phasentrennstelle 3 hat die Fahrleitung einen kurzen, spannungslosen (neutralen) Abschnitt 3A, der im Allgemeinen geerdet wird. Hierzu ist ein Erdungsschalter 4 vorgesehen, über den der neutrale Abschnitt 3A der Phasentrennstelle 3 geerdet, also mit dem Rückleitungssystem verbunden werden kann. Die Speiseanordnung umfasst weiterhin zwei Schalter 5A und 5B. die zum Beispiel als Mastschalter ausgeführt werden können, mit Hilfe welcher die Fahrleitungsabschnitte 1, 1' über den neutralen Abschnitt 3A miteinander elektrisch verbunden werden können.

Fig. 1 zeigt den Normalbetrieb, bei dem der Erdungsschalter 4 geschlossen und die Schalter 5A, 5B geöffnet sind. Bei dem Ausfall eines der beiden Unterwerken 2 bzw. 2' muss das jeweils andere Unterwerk 2' bzw. 2 die elektrische Energie für beide Fahrleitungsabschnitte 1,1' bereitstellen. Hierzu wird der Erdungsschalter 4 geöffnet und die Schalter 5A, 5B geschlossen. Aufgrund der größeren Speiselänge des noch in Betrieb befindlichen Unterwerks sinkt die Fahrleitungsspannung auf dem Streckenabschnitt. Die Fahrleitungsspannung U darf einen Minimalwert $U_{min}$ nicht unterschreiten und eine Maximalspannung $U_{max}$ nicht überschreiten, d. h. die Fahrleitungsspannung muss sich in dem Bereich zwischen $U_{min}$ und $U_{max}$ bewegen. Dies ist aber bei dem Ausfall eines Unterwerks nicht immer gewährleistet, so dass der Bahnbetrieb auf dem Streckenabschnitt unter Umständen reduziert werden muss. In diesem Fall ist die Redundanz der Unterwerke nicht in vollem Maß vorhanden. Bei der Konzeption eines Fahrleitungssystems mit großen Speiselängen oder bei der Erweiterung eines bestehenden Fahrleitungssystems stellt sich dieses Problem auch im Normalbetrieb.

Fig. 2 zeigt in vereinfachter schematischer Darstellung die erfindungsgemäße Speiseanordnung im einseitig gespeisten Fahrleitungsnetz, die neben den Komponenten der bekannten Speiseanordnung (Fig. 1) noch weitere Komponenten umfasst. Die einander entsprechenden Teile sind mit den gleichen Bezugszeichen bezeichnet.

Die erfindungsgemäße Speiseanordnung verfügt über einen oder mehrere Autotransformatoren, die der Stützung der Fahrleitungsspannung dienen. Bei dem vorliegenden Ausführungsbeispiel umfasst die erfindungsgemäße Speiseanordnung nur einen Autotransformator 6, wobei das Fahrleitungssystem nur zwei Unterwerke 2, 2' und zwei Fahrleitungsabschnitte 1, 1', die von nur einer Phasentrennstelle 3 getrennt sind, umfasst.

Der Autotransformator 6 (Spattransformator) ist ein Transformator mit nur einer Wicklung, die mehrere Anzapfungen aufweist. Bei dem vorliegenden Ausführungsbeispiel hat die Wicklung drei Anzapfungen 6A, 6B, 6C, wobei die erste Anzapfung 6A einem Übersetzungsverhältnis von 1: 1, die zweite Anzapfung 6B einem Übersetzungsverhältnis von 1:1,125 und die dritte Anzapfung 6C einem Übersetzungsverhältnis von 1: 1,25 entspricht.

Der Autotransformator 6 kann mit der Unterspannungsseite dem Ende 1A des einen Fahrleitungsabschnitts 1 oder dem Ende 1A' des anderen Fahrleitungsabschnitts 1' zugeschaltet werden. Das Ende des jeweils anderen Abschnittes kann der Oberspannungsseite des Autotransformators zugeschaltet werden. Dabei können durch die Stellung des Stufenschalters 8 unterschiedliche Übersetzungsverhältnisse eingestellt werden. Zum Zuschalten des Autotransformators 6 dient eine Einrichtung 7, die einen Stufenschalter 8 und eine Regel- und Steuerungseinheit 9 aufweist. Bei dem vorliegenden Ausführungsbeispiel weist die Phasentrennstelle neben den Schaltern 5A und 5B zwei weitere Schalter 5C und 5D auf, die vorzugsweise den gleichen konstruktiven Aufbau wie die Schalter 5A und 5B haben. Mit dem Schalter 5A kann das Ende 1A des einen Fahrleitungsabschnitts 1 mit dem neutralen Abschnitt 3A der Phasentrennstelle 3 verbunden werden, während mit dem Schalter 5B das Ende 1A' des anderen Fahrleitungsabschnitts 1' mit dem neutralen Abschnitt 3A der Phasentrennstelle 3 verbunden werden kann. Der neutrale Abschnitt 3A ist seinerseits an die Oberspannungsseite des Autottansformators 6 fest angeschlossen. Mit dem Schalter 5C kann das Ende 1A des einen Fahrleitungsabschnitts 1 über den Stufenschalter 8 und die Anzapfungen 6A bis 6C an die Unterspannungsseite des Autotransformators 6 angeschlossen werden, während mit dem Schalter 5D das Ende 1A' des anderen Fahrleitungsabschnitts 1' über den Stufenschalter 8 und die Anzapfungen 6A bis 6C an die Unterspannungsseite des Autotransformators 6 angeschlossen werden kann. In Abhängigkeit von der Stellung des Stufenschalters 8 kann also die Verbindung des Ende 1A bzw. 1A' des Fahrleitungsabschnittes 1 bzw. 1' mit der Unterspannungsseite des Autotransformators 6 wahlweise über die einzelnen Anzapfungen 6A bis 6C erfolgen.

Der Stufenschalter 8 wird in Abhängigkeit von der Fahrleitungsspannung gesteuert, die am Ort des Autotransformators am Ende eines der Fahrleitungsabschnitte 1A bzw. 1A' gemessen wird. Die Spannung wird von einer Steuer- oder Regeleinheit 9 der Einrichtung 7 zum Zuschalten des Autotransformators erfasst, die mit der Sekundärseite eines der Spannungswandler 10A, 10B über in den Figuren nicht dargestellte Leitungen verbunden ist, wobei die Spannungswandler 10A, 10B primärseitig an die Enden der Leitungsabschnitte angeschlossen sind.

Die Steuer- und Regeleinheit 9 ist über in den Figuren nicht dargestellte Steuerleitungen mit dem Stufenschalter 8 verbunden. Die Steuerung oder Regelung kann voll automatisch erfolgen. Die Anzahl der Stufen des Stufenschalters, Übersetzungsverhältnisse bei einzelnen Stufen und folglich die Spannungsdifferenz zwischen den Stufen kann unterschiedlich groß gewählt werden. Vorzugsweise wird eine möglichst feinstufige Abstufung angestrebt. Die Steuer- oder Regeleinheit 9 stellt die Position des Stufenschalters 8 derart ein, dass der Autotransformator 6 mit dem passenden Übersetzungsverhältnis zugeschaltet wird, um die Spannung am Ende des oberseitig angeschlossenen Fahrleitungsabschnitts so anzuheben, dass sie zwischen $U_{min}$ und $U_{max}$ liegt. Die Steuer- und Regeleinheit 9 kann beispielsweise über einen Mikroprozessor verfügen.

Fig. 2 zeigt die Speiseanordnung im Normalbetrieb, in dem der Erdungsschalter 4 geschlossen ist, sodass der Autotransformator 6 kurzgeschlossen und der neutrale Abschnitt geerdet ist. Weiterhin sind die Schalter 5A bis 5D geöffnet. Der eine Fahrleitungsabschnitt 1 wird von dem Unterwerk 2 und der andere Fahrleitungsabschnitt 1' wird von dem Unterwerk 2' mit Einphasenwechselspannung versorgt. Im Normalbetrieb wird der Autotransformator nicht eingesetzt und die erfindungsgemäße Speiseanordnung unterscheidet sich also funktionsmäßig nicht von einer konventionellen Speiseanordnung (Fig. 1).

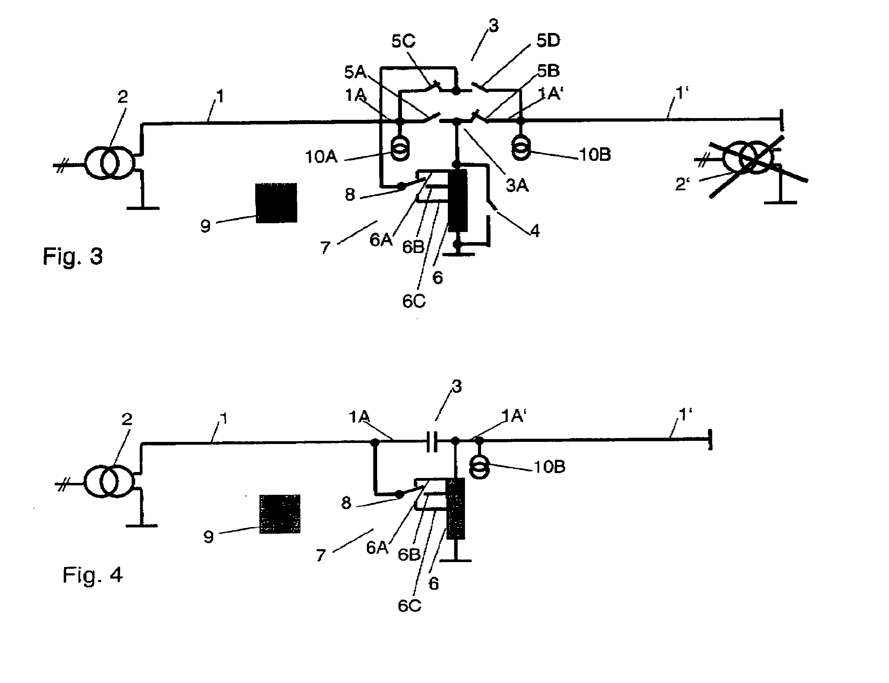

Für den Fall, dass beispielsweise das Unterwerk 2' ausfällt, muss das Unterwerk 2 die Spannungsversorgung der Strecke bis zum ausgefallenen Unterwerk 2' übernehmen (Fig. 3). Der Erdungsschalter 4 wird geöffnet und die Schalter 5B und 5C werden geschlossen, sodass der Autotransformator 6 mit der Oberspannungsseite dem Ende 1A' des Fahrleitungsabschnitts 1' des ausgefallenen Unterwerks 2' zugeschaltet wird und mit der Unterspamungsseite dem Ende 1A des Fakleitungsabschnitts 1 zugeschaltet wird, der noch von dem Unterwerk 2 versorgt wird. Dabei bleiben die anderen Schalter 5A und 5D geöffnet. In Abhängigkeit von der nach dem Ausfall des Unterwerks 2' von einem der Spannungswandler 10A oder 10B gemessenen Fahrleitungsspannung am Ort des Autotransformators bestimmt die Steuer- oder Regeleinheit 9 die Stellung des Stufenschalters 8, um ein passendes Übersetzungsverhältnis für den Autotransfonnator einzustellen. Durch geringfügige Anpassung des Steuerungs- und Regelungsalgorithmus können die Spannungsmesswerte entweder vom Spannungswandler 10A oder vom Spannungswandler 10B verwendet werden.

Der Autotransformator 6 wird mit dem Stufenschalter 8 gemäß dem Ist-Spannungsverhältnis, das durch einen der Spannungswandler 10A oder 10B erfasst wird, angesteuert. Das Grundprinzip der Regelung besteht darin, die Spannung auf der Oberspannungsseite möglichst nahe am Soll-Wert zu halten, jedoch eine Überschreitung des maximal zulässigen Spannungswertes zu vermeiden.

Bei dem vorliegenden Ausführungsbeispiel einer Speiseanordnung im AC 1x25 kV 50 Hz Fahrleitungsnetz wird angenommen, dass der Stufenschalter drei Stufen (6A, 6B, 6C) mit den Transformationsfaktoren 1:1, 1:1,125 und 1:1,25 hat, wobei die DIN EN 50163:2005 gelten soll. Die Spannungsverhältnisse am Autotransformator sind bei verschiedenen Stellungen des Stufenschalters in der nachfolgenden Tabelle zusammengefasst, die als Grundlage für den Regel- und Steuerungsalgorithmus dienen kann. Der Regel- und Steuerungsalgorithmus kann mit Hilfe der Leistungsflusssimulation für jeden konkreten Einsatzfall optimiert werden.

| Spannung auf der Unterspannungsseite (kV) | Stellung | Transformations-faktor | Resultierende Spannung auf der Oberspannungsseite (kV) |
|---|---|---|---|
| 24,4 ...29 | 1 | 1:1 | 24,4 ...29 |
| 22,0 ...24,4 | 2 | 1:1,125 | 24,75 ...27,5 |
| 17,5 ...22,0 | 3 | 1:1,25 | 21,9 ...27,5 |

Das Grundprinzip der Regelung liegt darin, die Spannung auf der Hochspannungsseite so nah wie möglich an 27,5 kV, d.h. an $U_{max1}$, zu halten, ohne den Wert von $U_{max2}$ von 29 kV zu überschreiten. Die Möglichkeit der Einstellung des Übersetzungsverhältnisses auch auf 1:1 (Stufe 1) erlaubt, ein unzulässig hohes Ansteigen der Spannung auf der Hochspannungsseite, im betrachteten Beispiel die Überschreitung von $U_{max2}$, beispielsweise beim Bremsbetrieb zu verhindern. Neben der Verbesserung der Fahrleitungsspannung hinter dem Autotransformator, also am Fahrleitungsabschnitt 1', wird durch das beschriebene Regelungsprinzip des Stufenschalters des Autotransformators auch die mittlere nutzbare Spannung, die für TSI Strecken von Bedeutung ist, verbessert.

In der Praxis sollte sichergestellt werden, dass immer mindestens eine der Anzapfungen 6A, 6B, 6C des Autotransformators 6 zugeschaltet ist, da ansonsten die volle Fahrleitungsspannung auf dem Stufenschalter 8 anliegt, wodurch der Stufenschalter zerstört werden könnte. Daher stellt die Einrichtung 7 zum Zuschalten des Autotransformators sicher, dass eine Stufe bei der Umschaltung erst nur dann getrennt wird, wenn auch eine andere Stufe bereits zugeschaltet ist. Aus diesem Grund werden bei der Stufenumschaltung zwei Stufen für eine kurze Zeit kurzgeschlossen, so dass für diese Zeit ein windungsschlussähnlicher Zustand für den Autotransformator entsteht. Der Autotransformator und der Stufenschalter müssen solchen kurzen, jedoch häufig auftretenden Zuständen thermisch und dynamisch ohne Schaden widerstehen können.

Der Stufenschalter kann mit mechanischen Bauteilen und/oder leistungselektronischen Komponenten aufgebaut sein. Eine der wichtigsten Anforderungen an den Stufenschalter ist die Tauglichkeit für häufiges Schalten unter Last. Je mehr Stufen vorgesehen sind, desto genauer lässt sich die Aufgabe der Haltung der Spannung am Ende des Fahrleitungsabschnittes 1A' am Sollwert erfüllen. Wenn die Stufung fein genug ist und sich die Spannung auf der Hochspannungsseite nah genug an 27,5 kV Wert halten lässt, kann die Speiselänge des Unterwerkes im Vergleich zu einem konventionellen Einspannungssystem mehr als verdoppelt werden. Eine feinere Stufung bedeutet weiterhin eine kleinere Spannungsdifferenz zwischen den Stufen. Andererseits setzt eine feinere Stufung einen aufwendigeren Stufenschalter und häufigeres Schalten voraus. Die Stufung muss dabei nicht gleichmäßig sein.

Weiterhin muss der Stufenschalter für die maximale Spannung ausgelegt werden, die zwischen der obersten und der untersten Anzapfung des Autotransformators anliegen kann. Im betrachteten Ausführungsbeispiel beträgt diese

Spannung $29\text{kV} - \dfrac{29\text{kV}}{1{,}25} = 5{,}8\text{kV}$ . . Für den Autotransformator kann ein besonderes Schutzkonzept vorgesehen sein. Eine der Möglichkeiten des Schutzes des Autotransformators ist der Einsatz eines Differentialschutzes. Der Autotransformator kann entweder mit eigenen Leistungsschaltern ausgestattet werden oder mit dem Unterwerk über einen ausreichend schnellen Kommunikationskanal verbunden werden, um bei einer Störung den Abschaltbefehl an die Leistungsschalter des Unterwerkes übertragen zu können.

Da sich mit der Erfindung die Speiselänge deutlich vergrößern lässt, ist insbesondere darauf zu achten, dass ein entfernter Kurzschluss auf der Fahrleitung vom Unterwerk aus immer noch zuverlässig erkannt werden kann. Die Auswertung des Phasenwinkels der Impedanz durch ein Schutzrelais nimmt daher an Bedeutung zu. Alternativ kann der oberspannungsseitig an den Autotransformator angeschlossene Fahrleitungsabschnitt über den Leistungsschalter des Autotransformators und das zugehörige Schutzrelais geschützt werden.

Im Unterschied zu den in Zweispannungssystemen eingesetzten Autotransformatoren, die üblicherweise das Übersetzungsverhältnis von 2:1 haben, liegt das Übersetzungsverhältnis des Autotransformators bei dem erfindungsgemäßen Einphasensystem nur zwischen beispielsweise 1:1 bis 1: 1,25. Daher ist die Bauweise des erfindungsgemäßen Autotransformators auch kompakter als die der herkömmlichen Autotransformatoren für Zweispannungssysteme.

Mit dem erfindungsgemäßen Einsatz des Autotransformators wird die Redundanz der ein oder mehrere Unterwerke und Fahrleitungsabschnitte umfassenden Speiseanordnung erhöht. Der Autotransformator kann dabei sowohl beim Neubau als auch beim Ausbau eines Fahrleitungssystems eingesetzt werden.

Fig. 4 zeigt in vereinfachter Darstellung eine Speiseanordnung mit einem Fahrleitungsabschnitt 1, wobei die Speiseanordnung um einen weiteren Fahrleitungsabschnitt 1' verlängert werden soll. Die einander entsprechenden Teile sind wieder mit den gleichen Bezugszeichen versehen. Beide Fahrleitungsabschnitte 1 und 1' sind von einer Trennstelle 3 getrennt. Der Autotransformator 6 ist mit der Unterspannungsseite an dem Ende 1A des bestehenden Fahrleitungsabschnitts 1 angeschlossen und ist mit der Oberspannungsseite an dem Ende 1 A' des neuen Fahrleitungsabschnitts 1' angeschlossen. Dadurch wird die Spannung am neuen Fahrleitungsabschnitt 1' angehoben. Die Position des Stufenschalters 8 zum Einstellen des Übersetzungsverhältnisses des Autotransformators 6 wird in Abhängigkeit von der Spannung eingestellt, die am Ort des Autotransformators anliegt, beispielsweise am Ende 1A' des neuen Leitungsabschnitts 1'. Diese Spannung wird über einen Spannungsumwandler 10B gemessen.

In den beschriebenen Ausführungsbeispielen wird die Oberspannungsseite ans Ende eines Fahrleitungsabschnittes direkt über einen konventionellen Schalter angeschlossen, und die Unterspannungsseite wird ans Ende eines anderen Fahrleitungsabschnittes über einen Stufenschalter angeschlossen. Es ist jedoch auch eine Ausführung möglich, bei welcher die Oberspannungsseite über einen Stufenschalter und die Unterspannungsseite über einen konventionellen Schalter angeschlossen wird.

**Patentansprüche**

1. Einphasige Speiseanordnung zur Versorgung von Wechselstrom-Bahnen mit Einphasenwechselstrom, das mehrere Fahrleitungsabschnitte (1, 1') und ein oder mehrere Unterwerke (2, 2') zur Bereitstellung von elektrischer Energie für elektrische Sehienentriebfahrzeuge umfasst, wobei die Enden (1A, 1A') der von aufeinanderfolgenden Unterwerken gespeisten Fahrleitungsabschnitten von einer Trennstelle (3) getrennt sind,

**dadurch gekennzeichnet, dass**

zur Erhöhung der Fahrleilungsspannung ein zuschaltbarer Autotransformator (6) und eine Einrichtung (7) zum Zuschalten des Autotransformators vorgesehen ist, wobei die Einrichtung (7) zum Zuschalten des Autotransformators derart ausgebildet ist, dass die Unterspannungsseite des Autotransformators (6) an das Ende (1A, 1A') des einen der aufeinanderfolgenden Fahrleitungsabschnitte (1, 1') und die Oberspannungsseite des Autotransformators (6) an das Ende (1A, 1A') des anderen der aufeinanderfolgenden Fahrleitungsabschnitte (1,1') anschließbar ist

2.  Fahrleitungssystem nach Anspruch 1, **dadurch gekennzeichnet, dass** der Autotransformator (6) ein Transformator mit einer Wicklung ist, die mehrere Anzapfungen (6A, 6B, 6C) hat, wobei die Einrichtung (7) zum Zuschalten des Autotransformators (6) derart ausgebildet ist, dass eine der Anzapfungen (6A, 6B, 6C) mit dem Ende (1A, 1A') des einen der aufeinanderfolgenden Fahrleitungsabschnitte (1,1') verbindbar ist.

3.  Fahrleitungssystem nach Anspruch 2, **dadurch gekennzeichnet, dass** die Einrichtung (7) zum Zuschalten des Autotransformators eine Einrichtung (9, 10A, 10B) zur Messung der Fahrleitungsspannung an dem Ende (1A, 1A') des einen der aufeinanderfolgenden Fahrleitungsabschnitte (1, 1') aufweist, wobei die Einrichtung (7) zum Zuschalten des Autotransformators derart ausgebildet ist, dass in Abhängigkeit von der gemessenen Fahrleitungsspannung eine der Anzapfungen (6A, 6B, 6C) mit dem Ende (1A, 1A') des einen der aufeinanderfolgenden Fahrleitungsabschnitte (1,1') verbindbar ist.

4.  Fahrleitungssystem nach einem der Ansprüche 1 bis 3, **dadurch gekennzeichnet, dass** die Trennstelle (3) einen neutralen Abschnitt (3A) aufweist, der über einen Erdungsschalter (4) mit der Erde verbindbar ist, und ein erster Schalter (5A), über den das Ende (1A) des einen der aufeinanderfolgenden Fahrleitungsabschnitte (1) mit dem neutralen Abschnitt (3A) der Trennstelle (3) verbindbar ist, und ein zweiter Schalter (5B) vorgesehen sind, mit dem das Ende (1A') des anderen der aufeinanderfolgenden Fahrleitungsabschnitte (1') mit dem neutralen Abschnitt (3A) der Trennstelle (3) verbindbar ist, wobei die Wicklung des Autotransformators (6) und der Erdungsschalter (4) parallel geschaltet sind.

5.  Fahrleitungssystem nach Anspruch 4, **dadurch gekennzeichnet, dass** ein dritter Schalter (5C), über den ein der aufeinanderfolgenden Fahrleitungsabschnitte (1) mit dem Autotransformator (6) verbindbar ist, und ein vierter Schalter (5D) vorgesehen sind, über den der andere der aufeinanderfolgenden Fahrleitungsabschnitte (1') mit dem Autotransformator (6) verbindbar ist.

6.  Verfahren zur Versorgung von Wechselstrom-Bahnen mit Einphasenwechselstrom, das ein oder mehrere Unterwerke (2, 2') zur Bereitstellung von elektrischer Energie für elektrische Schienentriebfahrzeuge umfasst, wobei die Enden (1A, 1A') der von aufeinanderfolgenden Unterwerken gespeisten Fahrleitungsabschnitten von einer Trennstelle (3) getrennt sind,

    **dadurch gekennzeichnet, dass**

    zur Erhöhung der Fahrleitungsspannung die Unterspannungsseite eines Autotransformators an das Ende des einen der aufeinanderfolgenden Fahrleitungsabschnitte und die Oberspannungsseite des Autotransformators an das Ende des anderen der aufeinanderfolgenden Fahrleitungsabschnitte angeschlossen wird.

7.  Verfahren nach Anspruch 6, **dadurch gekennzeichnet, dass** der Autotransformator ein Transformator mit einer Wicklung ist, die mehrere Anzapfungen hat, wobei eine der Anzapfungen mit dem Ende des einen der aufeinanderfolgenden Fahrleitungsabschnitte verbunden wird.

8.  Verfahren nach Anspruch 7, **dadurch gekennzeichnet, dass** die Fahrleitungsspannung am Ort des Autotransformators gemessen wird, wobei in Abhängigkeit von der gemessenen Fahrleitungsspannung jeweils eine der Anzapfungen mit dem Ende des einen der aufeinanderfolgenden Fahrleitungsabschnitte verbunden wird.

9.  Verfahren nach einem der Ansprüche 6 bis 8, **dadurch gekennzeichnet, dass** im Normalbetrieb der neutrale Abschnitt der Trennstelle geerdet und die Wicklung des Autotransformators kurzgeschlossen wird.

10. Verfahren nach einem der Ansprüche 6 bis 9, **dadurch gekennzeichnet, dass** beim Ausfall eines der aufeinanderfolgenden Unterwerke die Erdung des neutralen Abschnitts der Trennstelle aufgehoben und die aufeinanderfolgenden Fahrleitungsabschnitte elektrisch miteinander verbunden werden, so dass beide Fahrleitungsabschnitte von dem im Betrieb befindlichen Unterwerk mit Einphasenwechselstrom versorgt werden, wobei zur Erhöhung der Fahrleitungsspannung die Oberspannungsseite des Autotransformators an das Ende des Fahrleitungsabschnitts, dessen Unterwerk ausgefallen ist, und die Unterspannungsseite des Autotransformators an das Ende des Fahrleitungsabschnitts, dessen Unterwerk sich weiterhin in Betrieb befindet, angeschlossen wird.

11. Verfahren nach einem der Ansprüche 6 bis 8, **dadurch gekennzeichnet, dass** im Normalbetrieb die Unterspannungsseite des Autotransformators an das Ende des einen der aufeinanderfolgenden Fahrleitungsabschnitte und die Oberspannungsseite des Autotransformators an das Ende des anderen der aufeinanderfolgenden Fahrleitungsabschnitte zur Erhöhung der Fahrleitungsspannung angeschlossen wird.

Fig. 1

Fig. 2

EP 2 497 681 A2

Fig. 3

Fig. 4